# EUROPEAN PATENT APPLICATION

(11) **EP 4 644 237 A1**
(43) Date of publication of application: **05.11.2025**
(21) Application number: 25172688.1
(22) Date of filing: 25.04.2025
(51) Int. Cl.: B64C 25/26, B64C 25/16, B64C 25/22

(54) **LANDING GEAR EXTENSION AND RETRACTION SYSTEM**

(30) Priority: 29.04.2024 GB 202405999
(71) Applicant: Airbus Operations Limited, Bristol BS34 7PA (GB); Airbus Opérations SAS, 31060 Toulouse Cedex 09 (FR)
(72) Inventor: PLATT, Ian, Bristol, BS34 7PA (GB); CAPELLERAS MAGANA, Laura, 31060 Toulouse (FR)
(74) Representative: EIP

(57) **Abstract**

Disclosed is a landing gear extension and retraction system 18 for an aircraft 1, the landing gear extension and retraction system comprising: a gear actuator 30 configured to move a landing gear 14, 16 of the aircraft between a retracted position and an extended position; a door actuator 32 configured to move a landing gear bay door 20 of the aircraft between a closed position and an open position, the landing gear bay door configured to at least partially cover an opening of a landing gear bay configured to receive the landing gear in the retracted position; a first valve arrangement 34 movable between a first state, in which fluid is suppliable along a first supply route 46 from the first valve arrangement to the gear actuator to actuate the gear actuator and fluid to actuate the door actuator is not supplied from the first valve arrangement, and a second state, in which fluid is suppliable along a second supply route 52 from the first valve arrangement to the door actuator to actuate the door actuator and fluid to actuate the gear actuator is not supplied from the first valve arrangement; and a third supply route 58 fluidically connecting the first supply route to the door actuator and configured, when the first valve arrangement is in the first state, to supply fluid from the first supply route to the door actuator to cause the door actuator to bias the landing gear bay door towards the open position.

## Description

### TECHNICAL FIELD

The present invention relates to systems for facilitating extension and/or retraction of aircraft landing gear.

### BACKGROUND

Systems for retracting and extending aircraft landing gears and for opening and closing aircraft landing gear bay doors associated with respective ones of the aircraft landing gear are known. There is a general desire to reduce a size, weight, cost and/or complexity of such systems, whilst ensuring correct positioning of the aircraft landing gears and/or aircraft landing gear bay doors during landing gear extension and/or retraction procedures.

### SUMMARY

A first aspect of the present invention provides a landing gear extension and retraction system for an aircraft, the landing gear extension and retraction system comprising: a gear actuator configured to move a landing gear of the aircraft between a retracted position and an extended position; a door actuator configured to move a landing gear bay door of the aircraft between a closed position and an open position, the landing gear bay door configured to at least partially cover an opening of a landing gear bay configured to receive the landing gear in the retracted position; a first valve arrangement movable between a first state, in which fluid is suppliable along a first supply route from the first valve arrangement to the gear actuator to actuate the gear actuator and fluid to actuate the door actuator is not supplied from the first valve arrangement, and a second state, in which fluid is suppliable along a second supply route from the first valve arrangement to the door actuator to actuate the door actuator and fluid to actuate the gear actuator is not supplied from the first valve arrangement; and a third supply route fluidically connecting the first supply route to the door actuator and configured, when the first valve arrangement is in the first state, to supply fluid from the first supply route to the door actuator to cause the door actuator to bias the landing gear bay door towards the open position.

During a landing gear extension or retraction procedure, the first valve arrangement is moved to the second state, and the second supply route receives fluid from the first valve arrangement and supplies the fluid to the door actuator. Pressure of the fluid causes the door actuator to actuate to cause the landing gear bar door to move from the closed position to the open position. The first valve arrangement is then moved to the first state, and the first supply route receives fluid from the first valve arrangement and supplies the fluid to the gear actuator. Pressure of the fluid causes the gear actuator to actuate to cause the landing gear to move from one of the extended position and the retracted position to the other of the extended position and the retracted position. The third supply route of the landing gear extension and retraction system of the present invention permits some pressurisation of the door actuator to bias the landing gear bay door towards the open position when the first valve arrangement is in the first state. Therefore, the landing gear bay door may be actively held in the open position when the landing gear is caused to move between the extended position and the retracted position. This may negate a need for a downlock system for the landing gear bay door to lock the landing gear bay door in the open position, or provide a failsafe in the event that such a downlock system does not lock the landing gear bay door in the open position. The first valve arrangement is then moved back to the second state, and the second supply route receives fluid from the first valve arrangement and supplies the fluid to the door actuator. Pressure of the fluid causes the door actuator to actuate to cause the landing gear bay door to move from the open position to the closed position.

Optionally, the second supply route comprises an opening line fluidically connected to the door actuator, wherein the landing gear extension and retraction system is configured, when the first valve arrangement is in the second state, to pressurise the opening line with fluid from the first valve arrangement to actuate the door actuator to cause the landing gear bay door to move towards the open position; and the third supply route is configured, when the first valve arrangement is in the first state, to supply fluid from the first supply route to the opening line. This may reduce a number of direct line connections to the door actuator compared to the third supply route being fluidically connected directly to the door actuator.

Optionally, the first supply route comprises a retraction line fluidically connected to the gear actuator and an extension line fluidically connected the gear actuator, and the landing gear extension and retraction system is configured to pressurise the retraction line with fluid from the first valve arrangement to move the gear actuator to cause the landing gear to move towards the retracted position, and to pressurise the extension line with fluid from the first valve arrangement to move the gear actuator to cause the landing gear to move towards the extended position.

Optionally, the third supply route comprises a second valve arrangement configured, when the first valve arrangement is in the first state, to receive fluid from whichever of the retraction line and the extension line is pressurised to a higher pressure than the other of the retraction line and the extension line, and to inhibit fluid from flowing, via the third supply route, from whichever of the retraction line and the extension line is pressurised to a higher pressure than the other of the retraction line and the extension line to the other of the retraction line and the extension line. Accordingly, the supply of fluid to the door actuator when the first valve arrangement is in the first state may not inhibit actuation of the gear actuator.

Optionally, the third supply route comprises a non-return valve configured to inhibit fluid flow from the non-return valve to the first supply route. Optionally, the second valve arrangement comprises the non-return valve.

Optionally, the second valve arrangement is movable between a first valve state and a second valve state. Optionally, when the retraction line is pressurised to a higher pressure than the extension line, the second valve arrangement is caused, by pressure in the retraction line, to adopt the first valve state, to enable fluid from the retraction line to be supplied to the second supply route to pressurise the door actuator and to inhibit fluid flow from the retraction line to the extension line, via the second valve arrangement, and, when the extension line is pressurised to a higher pressure than the retraction line, the second valve arrangement is caused, by pressure in the extension line, to adopt the second valve state, to enable fluid from the extension line to be supplied to the second supply route to pressurise the door actuator and to inhibit fluid flow from the extension line to the retraction line, via the second valve arrangement. Accordingly, the door actuator may bias the landing gear bay door towards the open position regardless of which of the retraction line and the extension line is pressurised, i.e., whether the gear actuator is caused to extend or retract the landing gear.

Optionally, the second valve arrangement is passively movable between the first and second states in response to pressurisation of one of the retraction line and the extension line. Accordingly, no control elements, such as electrical control signals, are required to move the second valve arrangement between the first and second valve states.

Optionally, the second valve arrangement comprises a shuttle valve operable, under pressure from whichever of the retraction line and the extension line is pressurised to a higher pressure than the other of the retraction line and the extension line, to switch the second valve arrangement between the first state and the second state. The shuttle valve may provide a relatively simple and robust means to selectively supply fluid from the retraction line or the extension line to the door actuator.

Optionally, the non-return valve is fluidically positioned between the shuttle valve and the second supply route. Accordingly, fluid is inhibited from flowing from the second supply route to the shuttle valve and, in turn, to the first supply route.

Optionally, the first valve arrangement comprises a selector valve movable between a first position, in which the first valve arrangement is in the first state, and a second position, in which the first valve arrangement is in the second state. Use of a selector valve may permit selective supply of fluid to the first supply route or the second supply route with a single valve.

Optionally, the landing gear extension and retraction system comprises a gear uplock actuator configured to lock and/or unlock a landing gear uplock of the aircraft, the landing gear uplock configured to lock the landing gear in the retracted position, wherein, when the first valve arrangement is in the first state, fluid is suppliable along the first supply route from the first valve arrangement to the gear uplock actuator to actuate the gear uplock actuator. Optionally, the fluid is suppliable from the first valve arrangement to the gear uplock actuator along the extension line.

Optionally, the landing gear extension and retraction system comprises a gear downlock actuator configured to lock and/or unlock a landing gear downlock of the aircraft, the landing gear downlock configured to lock the landing gear in the extended position, wherein, when the first valve arrangement is in the first state, fluid is suppliable along the first supply route from the first valve arrangement to the gear downlock actuator to actuate the gear downlock actuator. Optionally, the fluid is suppliable from the first valve arrangement to the gear downlock actuator along the retraction line.

Optionally, the landing gear extension and retraction system comprises a door uplock actuator configured to unlock a landing gear bay door uplock of the aircraft, the landing gear bay door uplock configured to lock the landing gear bay door in the closed position, wherein, when the first valve arrangement is in the second state, fluid is suppliable along the second supply route from the first valve arrangement to the door uplock actuator to actuate the door uplock actuator. Optionally, the fluid is suppliable from the first valve arrangement to the door uplock actuator along the opening line.

Optionally, the landing gear extension and retraction system comprises a controller configured to receive a command to move the landing gear between the extended position and the retracted position and, on the basis of the command, to cause the first valve arrangement to move between the first and second states.

A second aspect of the present invention provides a landing gear system for an aircraft, the landing gear system comprising: the landing gear extension and retraction system according to the first aspect; the landing gear of the aircraft; and the landing gear bay door of the aircraft. Such a landing gear system may omit the need for a landing gear bay door downlock to lock the landing gear bay door in the open position, as may typically be required in other landing gear systems, which may reduce a size, cost, weight and/or complexity of the landing gear system.

A third aspect of the present invention provides an aircraft comprising: the landing gear extension and retraction system according to the first aspect, or the landing gear system according to the second aspect.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic front view of an aircraft according to an example;
Figure 2 shows a schematic diagram of a landing gear system of the aircraft of Figure 1;
Figure 3 shows a schematic diagram of a landing gear extension and retraction system of the landing gear system of Figure 2, the landing gear extension and retraction system in a first configuration;
Figure 4 shows a schematic diagram of the landing gear extension and retraction system in a second configuration;
Figure 5 shows a schematic diagram of the landing gear extension and retraction system in a third configuration; and
Figure 6 shows a schematic diagram of the landing gear extension and retraction system in a fourth configuration.

### DETAILED DESCRIPTION

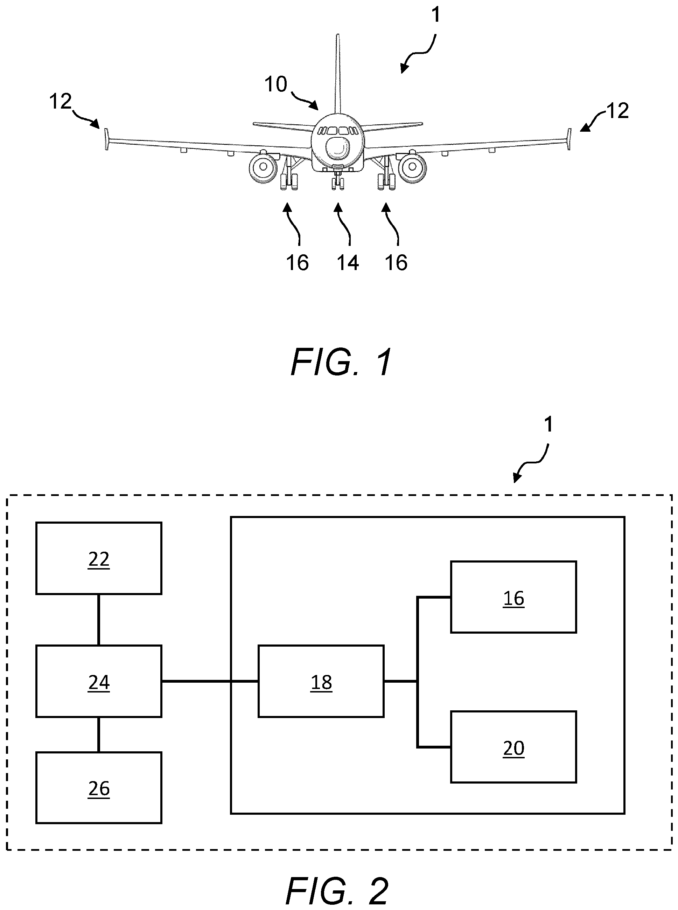

Figure 1 shows an aircraft 1 according to the example. The aircraft 1 has a fuselage 10, a pair of wings 12, a nose landing gear 14 and two main landing gears 16. It will be appreciated that other aircraft falling within the scope of the disclosure may have a different number or arrangement of landing gears.

During a landing gear extension or retraction procedure, the nose landing gear and main landing gears 14, 16 are movable between an extended position, as shown in Figure 1, and a retracted position by a respective landing gear extension and retraction system (LGERS) 18. In the extended position, the landing gears 14, 16 protrude from an underside of the fuselage 10 and support a weight of the aircraft 1 when the aircraft is on the ground. In the retracted position, the landing gears 14, 16 are each stowed within the fuselage 10 in a respective landing gear bay (not shown). An opening of each landing gear bay is selectively coverable by a landing gear bay door 20, shown schematically in Figure 2, to permit the respective landing gear 14, 16 to move in to and out of the landing gear bay. Each LGERS 18 moves the respective landing gear bay door 20 between a closed position and an open position. In the closed position, the landing gear bay door 20 at least partially covers the opening of the respective landing gear bay and the respective landing gear 14, 16 is inhibited by the landing gear bay door from moving in to or out of the landing gear bay. In the open position, the respective landing gear 14, 16 is not inhibited by the landing gear bay door 20 from moving in to or out of the landing gear bay.

Figure 2 schematically shows the LGERS 18 for one of the main landing gears 16. The LGERS 18 selectively receives power from a supply system 22. In this example, the LGERS 18 is a hydraulic system and receives pressurised hydraulic fluid from a fluid supply system 22 to power the LGERS 18. The fluid supply system 22 selectively supplies pressurised hydraulic fluid to the LGERS 18 via an isolator 24. The hydraulic fluid is pressurised by a pump (not shown) of the fluid supply system 22. The isolator 24 permits or inhibits hydraulic fluid supply from the fluid supply system 22 to the LGERS 18 on the basis of a signal, received from a system controller 26 of the aircraft 1, that is indicative of whether hydraulic fluid supply to the LGERS 18 should be provided or inhibited. In this example, the fluid reservoir 22 is common to all of the LGERSs 18 associated with the landing gears 14, 16 of the aircraft 1, but it will be appreciated that in other examples the fluid supply system 22 may supply only some of the LGERSs 18 of the aircraft 1, for example only the LGERS associated with one of the main landing gears 16 of the aircraft 1

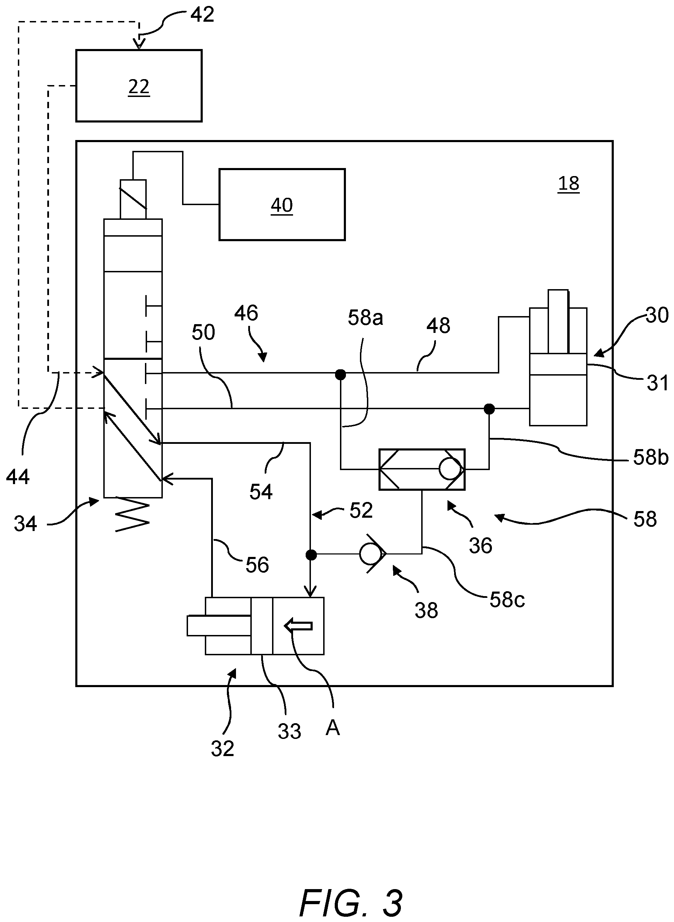

The LGERS 18 of Figure 2 will now be described with reference to Figures 3 to 6. It will be appreciated that the description may be applied to each of the LGERSs 18 of the aircraft 1.

The LGERS 18 comprises a gear actuator 30, a door actuator 32, a selector valve 34, a shuttle valve 36, a check valve 38 and a controller 40.

The gear actuator 30 is configured to move the landing gear between the retracted position and the extended position, and is fluidically connected to the fluid supply system 22. The door actuator 32 is configured to move the respective landing gear bay door 20 between the open position and the closed position, and is fluidically connected to the fluid supply system 22.

The selector valve 34 is fluidically connected to the fluid supply system 22 by a first connection line 42 and a second connection line 44. The first and second connection lines 42, 44 are shown with dashed lines to denote that the lines 42, 44 extend beyond the LGERS 18 and that the lines do not lead directly to the fluid supply system 22. For example, the first and second connection lines 42, 44 connect the fluid supply system 22 to the selector valve 34 via the isolator 24, which is omitted for clarity.

The selector valve 34 is fluidically connected to a first supply route 46 of the LGERS 18. The first supply route 46 comprises a retraction line 48 and an extension line 50. The retraction line 48 is connected to the gear actuator 30 at one side of a piston 31 of the gear actuator 30, and to the selector valve 34. The extension line 50 is connected to the gear actuator 30 at an opposite side of the piston 31 of the gear actuator 30 to the retraction line 48, and to the selector valve 34. The piston 31 of the gear actuator 30 is movable in a first direction to extend the landing gear 16 when the extension line 50 is pressurised, or pressurised to a higher pressure than the retraction line 48, by fluid from the fluid supply system 22. The piston 31 of the gear actuator 30 is movable in a second direction, opposite the first direction, to retract the landing gear 16 when the retraction line 48 is pressurised, or pressurised to a higher pressure than the extension line 50, by fluid from the fluid supply system 22.

The selector valve 34 is fluidically connected to a second supply route 52 of the LGERS 18. The second supply route 52 comprises an opening line 54 and a closing line 56. The opening line 54 is connected to the door actuator 32 at one side of a piston 33 of the door actuator 32, and to the selector valve 34. The closing line 56 is connected to the door actuator 32 at an opposite side of the piston 33 of the door actuator 32 to the opening line 54, and to the selector valve 34. The piston 33 of the door actuator 32 is movable in a first direction to open the landing gear bay door 20 when the opening line 54 is pressurised, or pressurised to a higher pressure than the closing line 56, by fluid from the fluid supply system 22. The piston 33 of the door actuator 32 and is movable in a second direction, opposite the first direction, to close the landing gear bay door 20 when the closing line 56 is pressurised, or pressurised to a higher pressure than the opening line 54, by fluid from the fluid supply system 22.

The shuttle valve 36 and the check valve 38 are fluidically positioned between the first supply route 46 and the opening line 54, and form part of a third supply route 58. The shuttle valve 36 is fluidically connected to the retraction line 48, the extension line 50, and the opening line 54 by respective hydraulic lines, which also form part of the third supply route 58. A first hydraulic line 58a of these hydraulic lines connects the retraction line 48 to a first inlet of the shuttle valve 36. A second hydraulic line 58b of these hydraulic lines connects the extension line 50 to a second inlet of the shuttle valve 36. A third hydraulic line 58c of these hydraulic lines connects an outlet of the shuttle valve 36 to the opening line 54. The arrangement of the first, second and third hydraulic lines 58a, 58b, 58c relative to the shuttle valve 36 permits fluid to flow from the retraction line 48 or the extension line 50 to the opening line 54, and inhibits fluid from flowing from one of the retraction line 48 and the extension line 50 to the other of the retraction line 48 and the extension line 50 via the third supply route 58. The check valve is positioned along the third hydraulic line 58c between the shuttle valve 36 and the opening line 54 and inhibits fluid from flowing along the third hydraulic line 58c from the opening line 54 to the shuttle valve 36.

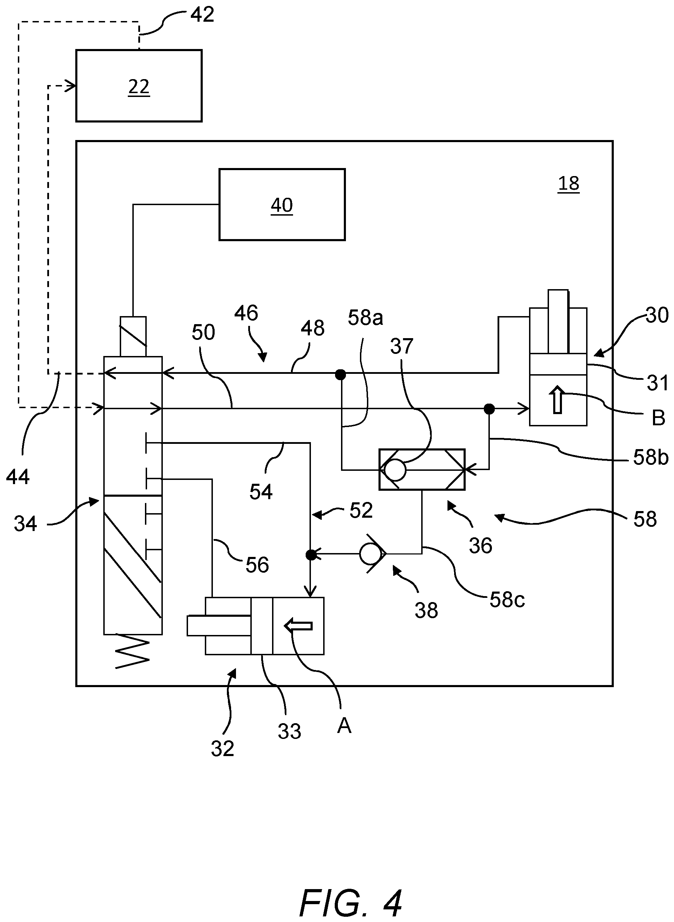

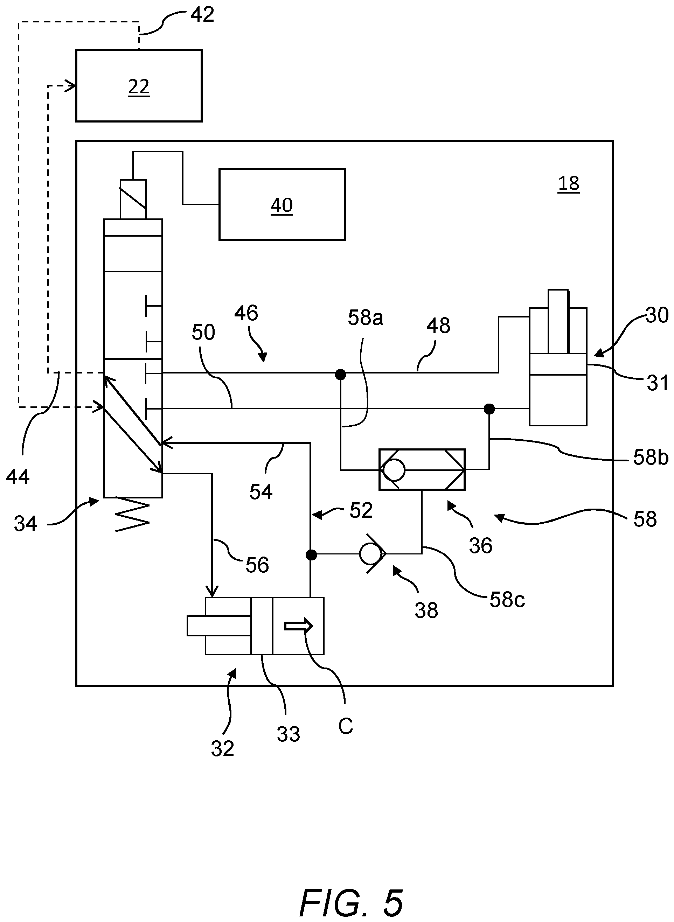

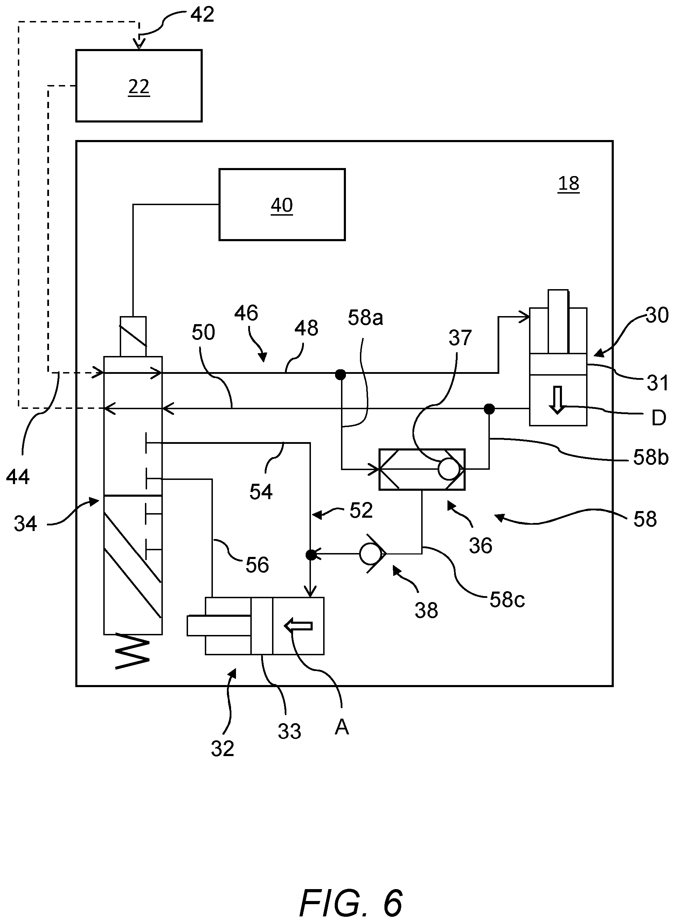

The selector valve 34 is movable between a first selector valve position, as shown in Figures 4 and 6, and a second selector valve position, as shown in Figures 3 and 5. When the selector valve 34 is at the first selector valve position, the first connection line 42 is fluidically connected to the extension line 50 at the selector valve 34, and the second connection line 44 is fluidically connected to the retraction line 48 at the selector valve. When the selector valve 34 is at the first selector valve position, the second supply route 52 is not fluidically connected to the first and second connection lines 42, 44 at the selector valve 34 and is isolated from the fluid supply system 22. When the selector valve 34 is at the second selector valve position, the first connection line 42 is fluidically connected to the opening line 54 at the selector valve 34, and the second connection line 44 is fluidically connected to the closing line 56 at the selector valve. When the selector valve 34 is at the second selector valve position, the first supply route 46 is not fluidically connected to the first and second connection lines 42, 44 at the selector valve 34 and is isolated from the fluid supply system 22.

The controller 40 is in communication with the selector valve 34 and causes the selector valve 34 to move between the first and second selector valve positions during a landing gear extension or retraction procedure, as will be described herein. The flow of fluid at different stages of an extension procedure described herein is indicated by the arrows on the lines 42, 44,48, 50, 52, 56, 58a, 58b, 58c and the selector valve 34 of Figures 3 to 6.

Before the aircraft 1 lands after a flight, the landing gears 14, 16 must be extended. The controller 40 receives a command to initiate extension of the landing gears 14, 16. In this example, the command is made by flight crew of the aircraft 1, but it will be appreciated that in other examples the command may be received from another system of the aircraft. For example, the command may be received from a controller for controlling the isolator 24, or from another controller that determines that the landing gears 14, 16 should be extended on the basis of one of more predetermined parameters.

Upon receipt of the command, the controller 40 determines whether hydraulic fluid is available from the fluid supply system 22 via the isolator 24. When the controller 40 determines that the hydraulic fluid is available, the controller 40 causes the selector valve 34 to move to the second selector valve position as shown in Figure 3. The controller 40 also causes the pump of the fluid supply system 22 to pump pressurised hydraulic fluid from the fluid supply system 22 to the second connection line 44, which is fluidically connected to the opening line 54 at the selector valve 34. Although not shown, pressure in the opening line 54 causes a landing gear bay door uplock of the aircraft 1 to unlock to permit movement of the landing gear bay door 20 away from the closed position.

The fluid supply system 22 does not supply pressure to the first connection line 42. As a result, pressure in the closing line 56 is less than pressure in the opening line 54. This results in the piston 33 of the door actuator 32 moving in a direction (indicated by arrow A in Figure 3) that causes the landing gear bay door 20 to move from the closed position towards the open position. Since pressure in the closing line 56 is less than pressure in the opening line 54, return fluid flows from the door actuator 32, along the closing line 56 and the first connection line 42 to the fluid supply system 22.

The check valve 38 inhibits fluid in the opening line 54 from flowing along the third supply route 58 to the shuttle valve 36 and first supply route 46.

A door sensor (not shown) determines that the landing gear bay door 20 has reached the open position, and sends a door-open signal to the controller 40. On the basis of the door-open signal, the controller causes the selector valve 34 to move to the first selector valve position, as shown in Figure 4.

The controller 40 then causes the pump of the fluid supply system 22 to pump pressurised hydraulic fluid from the fluid supply system 22 to the first connection line 42, which is fluidically connected to the extension line 50 at the selector valve 34. Although not shown, pressure in the extension line 50 causes a landing gear uplock of the aircraft 1 to unlock to permit movement of the landing gear 16 away from the retracted position.

The fluid supply system 22 does not supply pressure to the second connection line 44. As a result, pressure in the retraction line 48 is less than pressure in the extension line 50. This results in the piston 31 of the gear actuator 30 moving in a direction (indicated by arrow B in Figure 4) that causes the landing gear 16 to move from the retracted position towards the extended position. Since pressure in the retraction line 48 is less than pressure in the extension line 50, return fluid flows from the gear actuator 30, along the retraction line 48 and the second connection line 44 to the fluid supply system 22.

The pressure in the extension line 50 being higher than pressure in the retraction line 48 causes the shuttle valve 36 to move to a first valve state, as shown in Figure 4. In the first valve state, the first inlet of the shuttle valve 36 is blocked by a movable inlet blocking element 37 of the shuttle valve 36, such that hydraulic fluid can pass from the second hydraulic line 58b to the third hydraulic 58c line via the shuttle valve 36, but not from the first hydraulic line 58a to the third hydraulic line 58c. Accordingly, a portion of the fluid in the extension line 50 is supplied to the second supply route 52. The portion of the fluid is inhibited from flowing to the retraction line 48 by the movable inlet blocking element 37 of the shuttle valve 36 when the shuttle valve 36 is in the first valve state, and is instead routed along the third supply line 58c, through the check valve 38 to the opening line 54. Since the opening line is separated from the fluid supply system 22 at the selector valve 34, the fluid pressurises the door actuator 32 to the side of the piston 33 of the door actuator 32 that, when pressurised, causes the landing gear bay door 20 to move towards the open position (indicated by arrow A in Figure 4). Accordingly, the portion of fluid helps to hold the landing gear bay door 20 in the open position without the need for a downlock to lock the landing gear bay door 20 in the open position. Without the third supply route 58, the landing gear bay door 20 may otherwise move away from the open position whilst the selector valve is in the first selector valve position, for example due to aircraft motion or wind forces.

A gear sensor (not shown) determines that the landing gear 16 has reached the extended position, and sends a gear-down signal to the controller 40. On the basis of the gear-down signal, the controller 40 causes the selector valve 34 to move to the first selector valve position, as shown in Figure 5.

The controller 40 then causes the pump of the fluid supply system 22 to pump pressurised hydraulic fluid from the fluid supply system 22 to the first connection line 42, which is fluidically connected to the closing line 56 at the selector valve 34. The fluid supply system 22 does not supply pressure to the second connection line 44. As a result, pressure in the closing line 56 is more than pressure in the opening line 54. This results in the piston 33 of the door actuator 32 moving in a direction (indicated by arrow C in Figure 5) that causes the landing gear bay door 20 to move from the open position towards the closed position. Since pressure in the opening line 54 is less than pressure in the closing line 56, return fluid flows from the door actuator 32, along the opening line 54 and the second connection line 44 to the fluid supply system 22. The check valve 38 inhibits fluid in the opening line 54 from flowing along the third supply route 58 to the shuttle valve 36 and first supply route 46.

A door uplock (not shown) passively locks the landing gear bay door 20 in the closed position when the landing gear bay door 20 has reached the closed position. A sensor (not shown) determines that the landing gear bay door 20 is locked in the closed position by the door uplock, and sends a door-closed signal to the controller 40. On the basis of the door-closed signal, the controller 40 issues an extension-complete signal to the system controller 26. On the basis of the extension-complete signal, the system controller 26 causes the isolator 24 to isolate the LGERS 18 from the fluid supply system 22.

It will be appreciated that a similar procedure is employed during a landing gear retraction procedure, except that the retraction line 48 is pressurised instead of the extension line 50 when the selector valve 34 is in the first selector valve position. This is shown in Figure 6. Fluid thus flows along the first supply route 46 in an opposite direction to that indicated in Figure 4. The piston 31 of the gear actuator 30 is thus moved in the direction indicated by arrow D of Figure 6, which is opposite to the direction indicated by arrow B of Figure 4. In this instance, pressure in the retraction line 48 being higher than pressure in the extension line 50 causes the shuttle valve 36 to move to a second valve state. In the second valve state, the second inlet of the shuttle valve 36 is blocked by the movable inlet blocking element 37 such that hydraulic fluid can pass from the first hydraulic line 58a to the third hydraulic line 58c via the shuttle valve 36, but not from the second hydraulic line 58b to the third hydraulic line 58c. Accordingly, a portion of the fluid in the retraction line 48 is supplied to the second supply route 52. The portion of the fluid is inhibited from flowing to the extension line 50 by the movable inlet blocking element 37 of the shuttle valve 36 when the shuttle valve 36 is in the second valve state, and is instead routed along the third supply line 58c, through the check valve 38 to the opening line 54. Since the opening line 54 is separated from the fluid supply system 22 at the selector valve 34, the fluid pressurises the door actuator 32 to the side of the piston 33 of the door actuator 32 that causes the landing gear bay door 20 to move towards the open position (indicated by arrow A in Figure 6).

A gear sensor (not shown) determines that the landing gear 16 has reached the retracted position, and sends a gear-up signal to the controller 40. On the basis of the gear-up signal, the controller 40 causes the selector valve 34 to move to the first selector valve position, as shown in Figure 5, and the landing gear bay door 20 is closed as described above.

It will be appreciated that other examples are envisaged, which fall within the scope of the claims. For example, a different valve arrangement may be employed to supply fluid from the first supply route to the second supply route to bias the landing gear bay door to the open position during actuation of the gear actuator. An example could be that the landing gear extension and retraction system comprises, additionally or alternatively to the second valve arrangement, another valve arrangement that is operatively connected to the controller. The another valve arrangement may be for active control by the controller to selectively provide fluid from the first supply route to the door actuator, via the third supply route, when the selector valve is in the first selector valve position, to bias the landing gear bay door towards the open position. Additionally, or alternatively, the third hydraulic line of the third supply route may be fluidically connected directly to the door actuator rather than indirectly to the door actuator via the opening line 54, as is the case in the illustrated embodiment.

It is to be noted that the term "or" as used herein is to be interpreted to mean "and/or", unless expressly stated otherwise.

## Claims

1. A landing gear extension and retraction system for an aircraft, the landing gear extension and retraction system comprising:
a gear actuator configured to move a landing gear of the aircraft between a retracted position and an extended position;
a door actuator configured to move a landing gear bay door of the aircraft between a closed position and an open position, the landing gear bay door configured to at least partially cover an opening of a landing gear bay configured to receive the landing gear in the retracted position;
a first valve arrangement movable between a first state, in which fluid is suppliable along a first supply route from the first valve arrangement to the gear actuator to actuate the gear actuator and fluid to actuate the door actuator is not supplied from the first valve arrangement, and a second state, in which fluid is suppliable along a second supply route from the first valve arrangement to the door actuator to actuate the door actuator and fluid to actuate the gear actuator is not supplied from the first valve arrangement; and
a third supply route fluidically connecting the first supply route to the door actuator and configured, when the first valve arrangement is in the first state, to supply fluid from the first supply route to the door actuator to cause the door actuator to bias the landing gear bay door towards the open position.

2. The landing gear extension and retraction system according to claim 1, wherein:
the second supply route comprises an opening line fluidically connected to the door actuator, wherein the landing gear extension and retraction system is configured, when the first valve arrangement is in the second state, to pressurise the opening line with fluid from the first valve arrangement to actuate the door actuator to cause the landing gear bay door to move towards the open position; and
the third supply route is configured, when the first valve arrangement is in the first state, to supply fluid from the first supply route to the opening line.

3. The landing gear extension and retraction system according to claim 1 or claim 2, wherein the third supply route comprises a non-return valve configured to inhibit fluid flow from the non-return valve to the first supply route.

4. The landing gear extension and retraction system according to any one of the preceding claims, wherein:
the first supply route comprises a retraction line fluidically connected to the gear actuator and an extension line fluidically connected the gear actuator, and the landing gear extension and retraction system is configured to pressurise the retraction line with fluid from the first valve arrangement to move the gear actuator to cause the landing gear to move towards the retracted position, and to pressurise the extension line with fluid from the first valve arrangement to move the gear actuator to cause the landing gear to move towards the extended position; and
the third supply route comprises a second valve arrangement configured, when the first valve arrangement is in the first state, to:
receive fluid from whichever of the retraction line and the extension line is pressurised to a higher pressure than the other of the retraction line and the extension line, and
inhibit fluid from flowing, via the third supply route, from whichever of the retraction line and the extension line is pressurised to a higher pressure than the other of the retraction line and the extension line to the other of the retraction line and the extension line.

5. The landing gear extension and retraction system according to claim 4, wherein:
the second valve arrangement is movable between a first valve state and a second valve state;
when the retraction line is pressurised to a higher pressure than the extension line, the second valve arrangement is caused, by pressure in the retraction line, to adopt the first valve state, to enable fluid from the retraction line to pressurise the door actuator and to inhibit fluid flow from the retraction line to the extension line, via the second valve arrangement; and
when the extension line is pressurised to a higher pressure than the retraction line, the second valve arrangement is caused, by pressure in the extension line, to adopt the second valve state, to enable fluid from the extension line to pressurise the door actuator and to inhibit fluid flow from the extension line to the retraction line, via the second valve arrangement.

6. The landing gear extension and retraction system according to claim 5, wherein the second valve arrangement is passively movable between the first and second states in response to pressurisation of one of the retraction line and the extension line.

7. The landing gear extension and retraction system according to claim 6, wherein the second valve arrangement comprises a shuttle valve operable, under pressure from whichever of the retraction line and the extension line is pressurised to a higher pressure than the other of the retraction line and the extension line, to switch the second valve arrangement between the first state and the second state.

8. The landing gear extension and retraction system according to any one of the preceding claims, comprising a controller configured to receive a command to move the landing gear between the extended position and the retracted position and, on the basis of the command, to cause the first valve arrangement to move between the first and second states.

9. A landing gear system for an aircraft, the landing gear system comprising:
the landing gear extension and retraction system according to any one of claims 1 to 8;
the landing gear of the aircraft; and
the landing gear bay door of the aircraft.

10. An aircraft comprising: a landing gear extension and retraction system according to any one of claims 1 to 8, or the landing gear system according to claim 9.
